# EUROPEAN PATENT APPLICATION

(11) **EP 4 123 535 A1**
(43) Date of publication of application: **25.01.2023**
(21) Application number: 21770564.9
(22) Date of filing: 12.02.2021
(51) Int. Cl.: G06Q 20/14, G06Q 50/18

(54) **BILLING INFORMATION PROCESSING DEVICE, BILLING INFORMATION PROCESSING SYSTEM, BILLING INFORMATION PROCESSING METHOD, AND NON-TEMPORARY COMPUTER-READABLE MEDIUM STORING BILLING INFORMATION PROCESSING PROGRAM**

(30) Priority: 19.03.2020 JP 2020049419
(71) Applicant: NEC Corporation, 108-8001 Tokyo (JP)
(72) Inventor: YAMANE, Hiroyoshi, Tokyo 108-8001 (JP)
(74) Representative: Betten & Resch
(86) International application number: PCT/JP2021/005279
(87) International publication number: WO 2021/186975

(57) **Abstract**

The present disclosure aims to provide a charging information processing apparatus, a charging information processing system, a charging information processing method, and a non-transitory computer readable medium storing a charging information processing program capable of preventing charging based on unauthorized information. A charging information processing apparatus according to the present invention includes: an IP core (21) configured to store statistical information for charging; an acceptance/rejection unit (30) configured to control acceptance and rejection of an operation of the IP core (21) based on license information of the IP core (21), the acceptance/rejection unit (30) acquiring the statistical information from the IP core (21) and outputting the statistical information to be transmitted to a charging server (40); and a statistical information confirmation unit (11) configured to confirm authenticity of the statistical information output from the acceptance/rejection means (30) by comparing the statistical information stored in the IP core (21) with the statistical information output from the acceptance/rejection means (30).

## Description

### Technical Field

The present invention relates to a charging information processing apparatus, a charging information processing system, a charging information processing method, and a charging information processing program.

### Background Art

Techniques of charging for hardware, in addition to charging for software, have been known. One example of these techniques for charging for hardware is a technique of charging for an Intellectual Property core (IP core) incorporated into a Field Programmable Gate Array (FPGA).

One of methods for selling an IP core by a vendor for providing the IP core is selling of a license to an IP core user. The vendor generally decides a license fee based on the size of the business of the IP core user who uses an IP core in their products and an estimated number of products shipped in which the IP core is used. Therefore, if an actual number of products where the IP core is used is greatly different from the estimated number of products, the IP core user pays and the vendor receives license fees that are higher or lower than the price that is commensurate with the actual IP core usage. Further, even if the license fee is decided based on the actual number of products shipped, the license fee is decided based on the assumption that the vendor trusts that the IP core user correctly reports the number of products shipped.

As described above, when the license for using the IP core is sold, there is a problem that a price that is not clear for the IP core user and the vendor may be set.

As a technique for solving the aforementioned problem, for example, Patent Literature 1 discloses a management system configured to determine whether or not it is possible to appropriately grant a license for allowing an end user (hereinafter referred to as a "user") of a product in which an IP core is used to use the IP core based on license information stored in a computer.

### Citation List

### Patent Literature

[Patent Literature 1] Japanese Patent No. 4217158

### Summary of Invention

### Technical Problem

In the management system disclosed in Patent Literature 1, unlike the aforementioned method of determining the license fee based on the estimated number of products shipped in which IP cores are used, charging for the use of IP cores may be accurately performed on a per-usage, per-application, or per-instance basis.

Patent Literature 1 does not take into consideration, however, preventing charging based on unauthorized information that has been tampered with.

The present disclosure has been made in order to solve the aforementioned problem, and an aim of the present disclosure is to provide a charging information processing apparatus, a charging information processing system, a charging information processing method, and a charging information processing program capable of preventing charging based on unauthorized information.

### Solution to Problem

A charging information processing apparatus according to the present invention includes:
an IP core configured to store statistical information for charging; an acceptance/rejection unit configured to control acceptance and rejection of an operation of the IP core based on license information of the IP core, the acceptance/rejection unit acquiring the statistical information from the IP core and outputting statistical information to be transmitted to a charging server; and a statistical information confirmation unit configured to confirm authenticity of the statistical information output from the acceptance/rejection unit by comparing the statistical information stored in the IP core with the statistical information output from the acceptance/rejection unit.

A charging information processing system according to the present invention includes: the aforementioned charging information processing apparatus; and a charging server capable of communicating with the charging information processing apparatus and that charges a user who uses the IP core based on the statistical information received from the charging information processing apparatus.

A charging information processing method according to the present invention includes: acquiring statistical information for charging from an IP core that stores the statistical information; acquiring statistical information to be transmitted to a charging server from an acceptance/rejection unit configured to control acceptance and rejection of an operation of the IP core based on license information of the IP core; and confirming authenticity of the statistical information acquired from the acceptance/rejection unit by comparing the statistical information acquired from the IP core with the statistical information acquired from the acceptance/rejection unit.

A charging information processing program according to the present invention causes a computer to execute the processing of: acquiring statistical information for charging from an IP core that stores the statistical information; acquiring statistical information to be transmitted to a charging server from an acceptance/rejection unit configured to control acceptance and rejection of an operation of the IP core based on license information of the IP core; and confirming authenticity of the statistical information acquired from the acceptance/rejection unit by comparing the statistical information acquired from the IP core with the statistical information acquired from the acceptance/rejection unit.

According to the present disclosure, it is possible to provide a charging information processing apparatus, a charging information processing system, a charging information processing method, and a charging information processing program capable of preventing charging based on unauthorized information.

### Brief Description of Drawings

Fig. 1 is a block diagram showing a configuration of an information processing apparatus according to a first example embodiment;
Fig. 2 is a block diagram showing a configuration of an information processing system according to a second example embodiment;
Fig. 3 is a flowchart showing processing of the information processing system according to the second example embodiment;
Fig. 4 is a flowchart showing processing of the information processing system according to the second example embodiment;
Fig. 5 is a block diagram showing a configuration of an information processing apparatus according to a third example embodiment; and
Fig. 6 is a diagram showing a hardware configuration example of the information processing system according to the second and third example embodiments.

### Example Embodiment

With regard to the problem described in the background art, if a system of charging for software is built, communication between functions can be easily performed by communication between processes. On the other hand, if a charging system for an IP core is built by hardware, there are following problems.

First, in order to enable a vendor to accurately charge for a use of an IP core by a user, means for retrieving statistical information stored in the IP core and transmitting the retrieved statistical information to the vendor via a network is required. The statistical information, which is information indicating the usage status of the IP core, includes, for example, the number of times the IP core is used, a time during which the IP core is used etc. Further, in order to transmit the statistical information to the vendor, it is necessary to confirm authenticity of the statistical information. Another function equivalent to license authentication for controlling the use of the IP core by the user based on license information that the vendor has is also necessary. It is desirable that these series of processings be performed in a generic manner without requiring special configurations.

Besides the aforementioned point, when the user transmits the statistical information to the vendor, security needs to be taken into account. Thus, the information transmitted from the user to the vendor needs to be limited to statistical information that is only necessary for charging. For example, the information transmitted from the user to the vendor should not include information such as personal information on the user that is unnecessary for charging. Further, if the statistical information has been tampered with before the vendor receives the statistical information, this tampering with the statistical information needs to be detected. Further, for the user, it is desirable that means for performing communication with the vendor and the content of the communication be clear. Also, even when connection between the user and the vendor is not available, means for collecting the statistical information and updating the license is required.

### <First Example Embodiment>

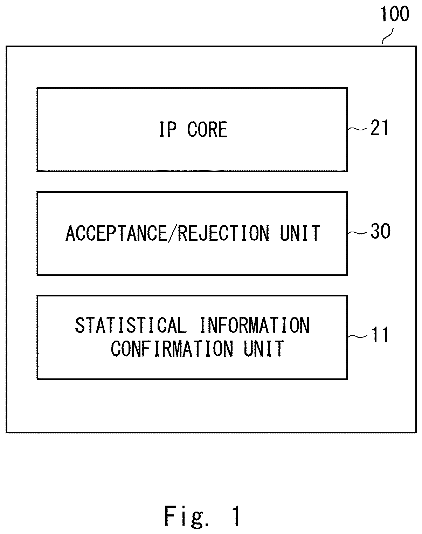

Hereinafter, with reference to Fig. 1, an information processing apparatus (charging information processing apparatus) according to a first example embodiment of the present invention will be described.

An information processing apparatus 100 includes an IP core 21, an acceptance/rejection unit 30, and a statistical information confirmation unit 11.

The IP core 21 is a target to be charged and stores statistical information indicating the usage status of the IP core 21.

The acceptance/rejection unit 30 acquires the statistical information and outputs the acquired statistical information.

The statistical information confirmation unit 11 confirms authenticity of the statistical information.

As described above, with the information processing apparatus 100 according to this example embodiment, it is possible to prevent charging based on unauthorized information.

### <Second Example Embodiment>

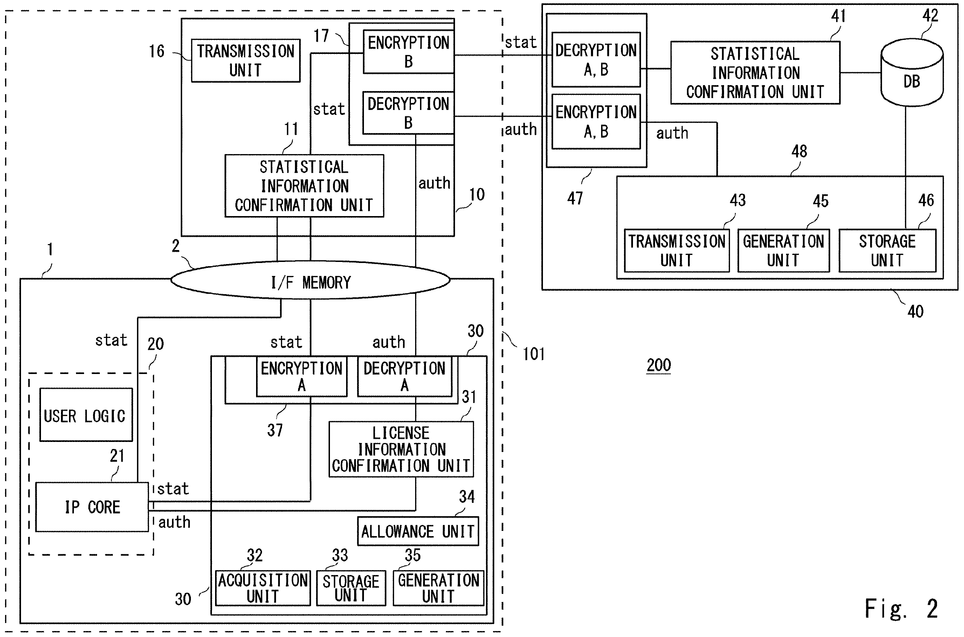

Hereinafter, with reference to Fig. 2, an information processing system (charging information processing system) according to a second example embodiment of the present invention will be described. As shown in Fig. 2, an information processing system 200 includes an information processing apparatus 101 and a charging server 40.

The information processing apparatus 101 includes an Operating System (OS) 10 and a hardware 1.

The OS 10 includes a statistical information confirmation unit 11, an encryption/decryption unit 17, and a transmission unit 16.

The statistical information confirmation unit 11 confirms authenticity of statistical information received from the acceptance/rejection unit 30. The statistical information confirmation unit 11 confirms that the charging server 40 has not transmitted unnecessary information other than information regarding charging for the IP core 21 based on license information received from the charging server 40.

The encryption/decryption unit 17 encrypts or decrypts data using a private key B distributed by the information processing apparatus 101. The encryption/decryption unit 17 further decrypts the license information received from the charging server 40 using the private key B.

The encryption/decryption unit 17 performs the aforementioned encryption and decryption using a known public key encryption method. The known public key encryption method may be, for example, Rivest Shamir Adleman (RSA) encryption, Elliptic-curve encryption, or ElGamal encryption. The same public key encryption method will be used in encryption/decryption units 37 and 47 that will be described later.

The transmission unit 16 transmits data to the charging server 40 or the acceptance/rejection unit 30. The transmission unit 16 transmits the statistical information and a hash value acquired from the acceptance/rejection unit 30 to the charging server 40. The transmission unit 16 transmits a hash value and the license information received from the charging server 40 to the acceptance/rejection unit 30.

The hardware 1 includes an IP core module 20, an acceptance/rejection unit 30, and a memory 2.

The IP core module 20 includes an IP core 21 and a user logic. The IP core 21 is, for example, partial circuit information for constituting an LSI such as a CPU, a memory, or an image processing circuit summarized as functional units. A system developer uses partial circuit information included in the IP core to link the partial circuit information with a logic that he/she has created (user logic). The system developer uses an IP core suitable for a development purpose, whereby it is possible to reduce man-hours involved in the development. The vendor provides a license for using the IP core 21 for the user. The vendor further charges the user in accordance with the usage status of the IP core 21.

The statistical information indicating the usage status of the IP core 21 is stored in the IP core 21. The statistical information is information indicating the usage status of the IP core 21 of the user such as the operating time, the communication traffic, the load factor, the power consumption, the temperature etc. of the IP core 21. These are merely examples and the statistical information may include other information items. The vendor enters into license agreement with the user by setting these statistical information items as a charging unit and charges for the usage of the IP core 21 by the user. The vendor may set one of these statistical information items as the charging unit or a combination of some of them as the charging unit. Accordingly, the vendor is able to monitor the usage status of the IP core 21 by the user in real time and accurately charge the user. Further, by using the statistical information stated above, charging for a general-purpose IP core 21 may be achieved.

The acceptance/rejection unit 30 includes an acquisition unit 32, a generation unit 35, an encryption/decryption unit 37, a storage unit 33, a license information confirmation unit 31, and an allowance unit 34.

The acquisition unit 32 acquires statistical information stored in the IP core 21. After the acquisition unit 32 has acquired the statistical information, the statistical information in the IP core 21 is updated as needed.

The generation unit 35 generates a hash value using a hash function from the statistical information acquired from the IP core 21. The hash function is, for example, an algorithm such as MD5 or SHA-1. The encryption/decryption unit 37 encrypts or decrypts data using a private key A distributed by the information processing apparatus 101. The encryption/decryption unit 37 encrypts the hash value of the statistical information generated by the generation unit 35. The encryption/decryption unit 37 further decrypts the hash value of the license information received from the OS 10.

The storage unit 33 stores the hash value of the statistical information encrypted by the encryption/decryption unit 37 in the memory 2.

The license information confirmation unit 31 confirms that the license information received from the charging server 40 via the OS 10 is authentic.

When authenticity of the license information has been confirmed by the license information confirmation unit 31, the allowance unit 34 transmits the license information to the IP core 21 and thus allows the IP core 21 to operate. This allows the user to use the IP core 21.

The memory 2 operates as an interface that temporarily holds data and exchanges data between the hardware 1 and the OS 10. The statistical information acquired by the IP core 21 is transmitted to the OS 10 by the acceptance/rejection unit 30 mapping the statistical information into the memory 2. Further, the memory 2 also functions as an interface for enabling the statistical information confirmation unit 11 to refer to the statistical information in the IP core 21 from the OS 10. The processing of the information processing apparatus 101 according to this example embodiment can be achieved by only specifying an interface between the memory 2 and the charging server 40 that will be described later. Therefore, the above processing is not limited by the OS to be used and may be applied to general-purpose computers.

The charging server 40 includes an encryption/decryption unit 47, a statistical information confirmation unit 41, an acceptance/rejection unit 48, and a database 42.

The encryption/decryption unit 47 encrypts or decrypts data using the public key A or B distributed by the information processing apparatus 101. The encryption/decryption unit 47 decrypts the encrypted statistical information and the encrypted hash value received from the information processing apparatus 101. Further, the encryption/decryption unit 47 encrypts the hash value and the license information generated by the generation unit 45 using the public key A and the public key B, respectively.

The statistical information confirmation unit 41 confirms authenticity of the statistical information received from the information processing apparatus 101.

The acceptance/rejection unit 48 includes a storage unit 46, a generation unit 45, and a transmission unit 43.

The storage unit 46 stores the statistical information whose authenticity has been confirmed by the statistical information confirmation unit 41 in the database 42.

The generation unit 45 generates license information indicating that the user has a right to use the IP core 21. The generation unit 45 further generates a hash value using a hash function from the generated license information.

The transmission unit 43 transmits the hash value and the license information that have been encrypted to the information processing apparatus 101.

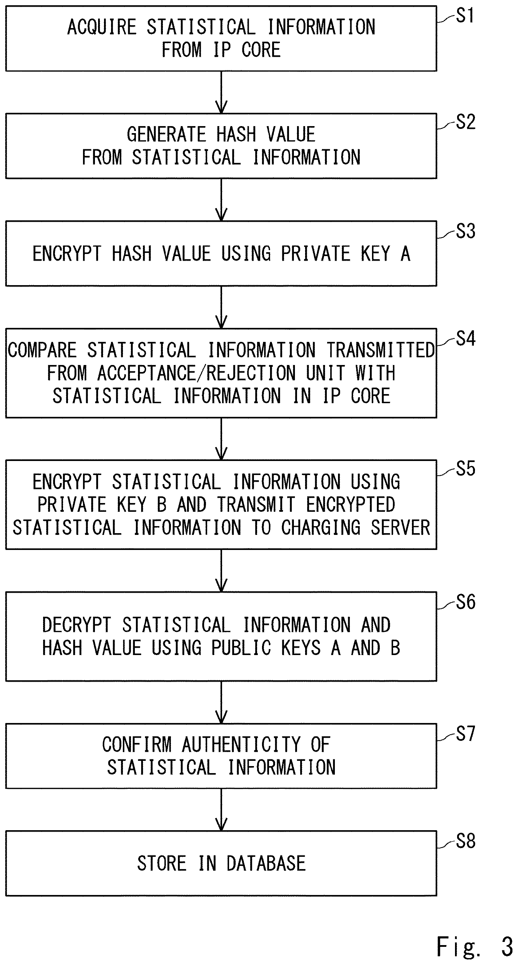

Referring next to a flowchart shown in Fig. 3, processing executed by the information processing system 200 will be described. In this example embodiment, communication is performed by a method in which a public key encryption method and a hash function method are combined with each other.

First, the information processing system 200 causes the acceptance/rejection unit 30 to have the private key A and causes the OS 10 to have the private key B. The information processing system 200 further sends the public keys A and B to the charging server 40 when the information processing system 200 is started.

The acquisition unit 32 acquires the statistical information recorded in the IP core 21 (Step S1). The generation unit 35 generates a hash value from the acquired statistical information using a hash function (Step S2). The encryption/decryption unit 37 encrypts the hash value generated by the generation unit 35 by the private key A (Step S3). The storage unit 33 stores the encrypted hash value in the memory 2. The storage unit 33 further stores the statistical information acquired from the IP core 21 in the memory 2.

With the use of the statistical information confirmation unit 11, both the statistical information in plaintext and the encrypted hash value can be checked from the OS 10. The statistical information confirmation unit 11 compares the statistical information stored in the memory 2 by the storage unit 33 with the statistical information stored in the IP core 21 (Step S4). Specifically, the statistical information confirmation unit 11 refers to (acquires) the statistical information in the IP core 21 without using the acceptance/rejection unit 30, compares this statistical information with the statistical information stored in the memory 2 by the storage unit 33, and checks whether or not there is a difference between them. If the content of the statistical information stored in the memory 2 matches the content of the statistical information stored in the IP core 21, it can be confirmed that the statistical information stored in the memory 2 via the acceptance/rejection unit 30 is authentic.

Since the statistical information in the IP core 21 is updated as needed, the operating time of the IP core 21 or the like in the statistical information in the IP core 21 may not completely match the operating time of the IP core 21 or the like in the statistical information on the memory 2. The statistical information confirmation unit 11 sets a threshold, which is a certain criterion, for the above difference. If the above difference does not exceed the threshold, the statistical information confirmation unit 11 regards that this difference is within an error range and that authenticity of the statistical information is not doubted. If a difference that exceeds the threshold has been detected, the statistical information confirmation unit 11 determines that there is a difference between the statistical information in the IP core 21 and the statistical information on the memory 2.

If, for example, the above threshold regarding the operating time of the IP core 21 is one second, even when the operating time of the statistical information in the IP core 21 is longer than the operating time of the statistical information stored in the memory 2 by less than one second, the statistical information stored in the memory 2 is determined to be authentic. The threshold may be set in consideration of, for example, a time required for the acquisition unit 32 to acquire the statistical information from the IP core 21, a time during which the generation unit 35 generates a hash value from the statistical information, or a charging unit for the IP core 21.

The statistical information confirmation unit 11 may output an error message when a difference that exceeds the threshold has been determined and notify the user that the statistical information on the memory 2 is not authentic.

Instead of determining whether or not there is a difference by setting a threshold, as described above, statistical information at a time when the acquisition unit 32 has acquired the statistical information from the IP core 21 may be temporarily stored in the IP core 21 and the memory 2, this statistical information may be compared with the statistical information stored in the memory 2 via the acceptance/rejection unit 30, and it may be confirmed that the contents thereof match each other.

Further, the statistical information confirmation unit 11 confirms that there is no unnecessary information in the encrypted data by confirming the length of data of the hash value that has been encrypted and stored in the memory 2.

If, for example, the generation unit 35 generates a hash value of the statistical information by an algorithm of SHA-1, a 20-byte hash value is generated. If this hash value is encrypted by the encryption/decryption unit 37, the encrypted hash value generally has a similar data length. Therefore, the statistical information confirmation unit 11 is able to determine whether or not unnecessary information other than the hash value of the statistical information is included in the encrypted data by confirming the length of the data that has been encrypted. Specifically, there is a method of setting a threshold, which is a certain criterion, like the case described above. If, for example, the threshold is 30 bytes, the statistical information confirmation unit 11 determines that information other than the statistical information is included in the encrypted data when the encrypted data has 30 bytes or larger. In this case, the processing is interrupted. In this case, the statistical information confirmation unit 11 may output an error message and notify the user that information other than the statistical information is included in the encrypted data.

According to the aforementioned processing, when authenticity of the statistical information acquired from the acceptance/rejection unit 30 and the encrypted hash value has been confirmed, the encryption/decryption unit 17 encrypts the statistical information received from the acceptance/rejection unit 30 by the private key B. The transmission unit 16 transmits the statistical information and the hash value that have been encrypted to the charging server 40 (Step S5). When data whose authenticity was confirmed by the statistical information confirmation unit 11 has been normally transmitted to the charging server 40, the transmission unit 16 may notify the user that the data has been normally transmitted. Further, the transmission date and time and the history of the results of the transmission may be stored so that the user can check the history at any time.

Further, while data is transmitted to the charging server 40 when authenticity of the statistical information acquired from the acceptance/rejection unit 30 and the encrypted hash value has been confirmed in the above description, data transmission may be allowed when authenticity of only one of them has been confirmed.

The encryption/decryption unit 47 decrypts the received statistical information and the received hash value using the public keys A and B obtained in advance (Step S6). The statistical information confirmation unit 41 confirms authenticity of the transmitted statistical information (Step S7). For example, the statistical information confirmation unit 41 generates a hash value from the decrypted statistical information and confirms that this hash value matches the decrypted hash value.

The storage unit 46 stores the statistical information in the database 42 (Step S8).

According to the aforementioned processing, the information processing system 200 is able to safely transmit the statistical information acquired from the IP core 21 to the charging server 40 from the information processing apparatus 101. Further, the user can clearly confirm that the information processing apparatus 101 transmits only the statistical information to the charging server 40.

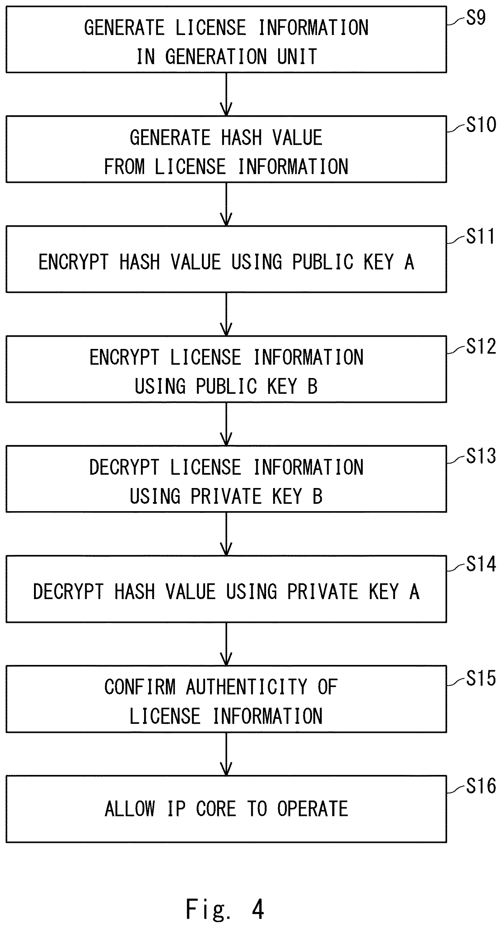

Next, with reference to a flowchart shown in Fig. 4, processing of controlling, by the vendor, the use of the IP core 21 by the user based on the license information in the information processing system 200 will be described.

First, the generation unit 45 generates license information indicating that the user has a right to use the IP core 21 (Step S9). The generation unit 45 generates a hash value using the hash function from the generated license information (Step S10). The encryption/decryption unit 47 encrypts the hash value generated by the generation unit 45 using the public key A (Step S11). The encryption/decryption unit 47 encrypts the license information generated by the generation unit 45 using the public key B (Step S12). The transmission unit 43 transmits the hash value and the license information that have been encrypted to the information processing apparatus 101.

The encryption/decryption unit 17 decrypts the license information transmitted from the transmission unit 43 using the private key B (Step S13). The statistical information confirmation unit 11 confirms that the transmission unit 43 has not transmitted unnecessary information by confirming the content of the license information transmitted from the transmission unit 43 and that the length of data of the hash value is short. The confirmation is performed by setting a threshold, which is a certain criterion, like in the processing of Step S4.

The transmission unit 16 transmits the hash value and the license information to the acceptance/rejection unit 30. The encryption/decryption unit 37 decrypts the hash value transmitted from the transmission unit 16 using the private key A (Step S14).

The license information confirmation unit 31 confirms that the license information is authentic (Step S15). When authenticity of the license information has been confirmed by the license information confirmation unit 31, the allowance unit 34 transmits the license information to the IP core 21 and allows the IP core 21 to operate (Step S16). Accordingly, the user is able to use the IP core 21.

According to the aforementioned processing, the license information regarding the IP core 21 can be transmitted safely and clearly to the IP core 21 of the information processing apparatus 101 from the charging server 40. Further, it is possible to allow the user to use the IP core 21 based on the transmitted license information.

The aforementioned series of processing between the information processing apparatus 101 and the charging server 40 is continuously performed at regular intervals, whereby it becomes possible to perform collection of the statistical information of the IP core 21 and reflection of the license information in real time. Further, according to the above processing, the user can enable or disable the function of the IP core 21 in a flexible manner as necessary, whereby it is possible to establish an on-demand charging system.

Further, if the connection with the charging server 40 has been disconnected or the license information obtained from the charging server 40 has been unauthorized information, the allowance unit 34 is able to stop the use of the IP core 21 by the user.

As described above, with the information processing system according to this example embodiment, it is possible to prevent charging based on unauthorized information.

Further, with the information processing method according to this example embodiment, statistical information for charging is acquired from the IP core that stores the statistical information, statistical information to be transmitted to a charging server is acquired from an acceptance/rejection unit configured to control acceptance and rejection of an operation of the IP core based on license information of the IP core, and authenticity of the statistical information acquired from the acceptance/rejection unit is confirmed by comparing the statistical information acquired from the IP core with the statistical information acquired from the acceptance/rejection unit, whereby it is possible to prevent charging based on unauthorized information.

### <Third Example Embodiment>

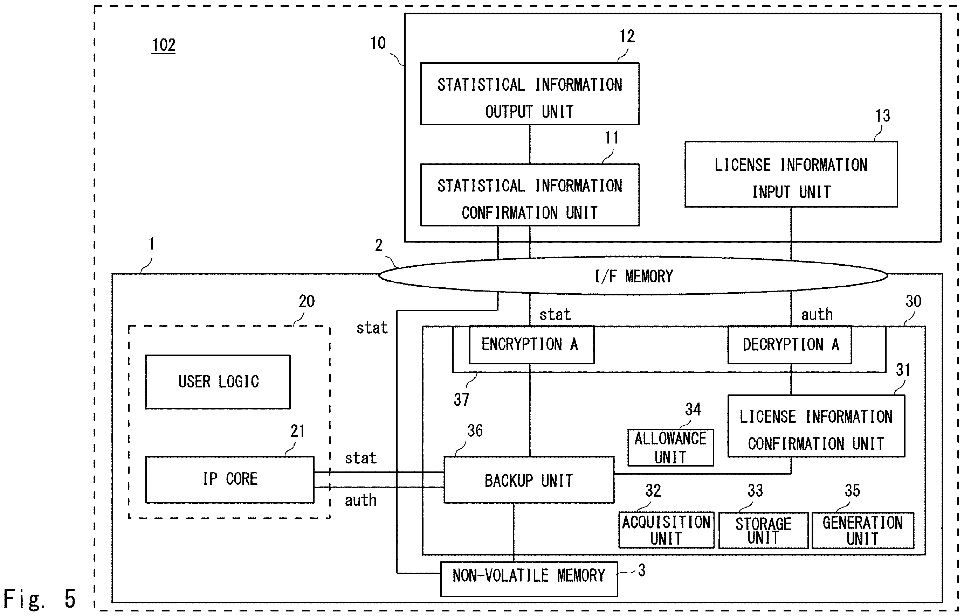

Hereinafter, with reference to Fig. 5, a third example embodiment of the present invention will be described. In this example embodiment, a mechanism that an information processing apparatus 102 collects statistical information of an IP core 21 and a mechanism that a user updates license information of the IP core 21 when connection between the information processing apparatus 102 and a charging server 40 via a network is disconnected from each other will be explained.

As shown in Fig. 5, the information processing apparatus 102 includes an OS 10 and a hardware 1. Further, data is exchanged between the OS 10 and the hardware 1 via a memory 2.

The OS 10 includes a statistical information confirmation unit 11, a statistical information output unit 12, and a license information input unit 13.

The statistical information confirmation unit 11 confirms authenticity of statistical information stored in a storage unit 33.

The statistical information output unit 12 includes a function for allowing the user to output the statistical information and the hash value. The statistical information output unit 12 is, for example, an optical disk drive capable of writing into a non-volatile optical disk such as CDROM, CDRW, or DVD.

The license information input unit 13 has a function for allowing the user to install the license information and the encrypted hash value into the information processing apparatus 102.

The hardware 1 includes an IP core module 20, an acceptance/rejection unit 30, the memory 2, and a non-volatile memory 3.

The IP core module 20 includes the IP core 21 to be charged.

The acceptance/rejection unit 30 includes an acquisition unit 32, the storage unit 33, a generation unit 35, an encryption/decryption unit 37, a license information confirmation unit 31, a backup unit 36, and an allowance unit 34.

The acquisition unit 32 acquires statistical information from the IP core 21.

The storage unit 33 stores the statistical information acquired by the acquisition unit 32 in the non-volatile memory 3. The storage unit 33 holds the statistical information stored in the non-volatile memory 3 for a certain period of time. Further, the storage unit 33 stores the statistical information and the encrypted hash value in the memory 2.

The generation unit 35 generates a hash value using a hash function from the statistical information stored in the non-volatile memory 3 when the user updates the license of the IP core 21. The generation unit 35 further generates a hash value using a hash function from the license information obtained from the vendor.

The encryption/decryption unit 37 encrypts the hash value generated by the generation unit 35 by the private key A. The encryption/decryption unit 37 further decrypts the hash value input from the license information input unit 13 using the private key A.

The license information confirmation unit 31 confirms authenticity of the license information input by the license information input unit 13.

The backup unit 36 stores the license information installed in the information processing apparatus 102 in the non-volatile memory 3.

The allowance unit 34 allows the IP core 21 to operate based on the stored license information.

The memory 2 operates as an interface that temporarily holds data and exchanges data between the hardware 1 and the OS 10. The statistical information acquired by the IP core 21 is transmitted to the OS 10 by the acceptance/rejection unit 30 mapping the statistical information into the memory 2. The memory 2 also functions as an interface for enabling the statistical information confirmation unit 11 to refer to the statistical information in the IP core 21 from the OS 10.

The non-volatile memory 3 is a storage device such as a hard disk that holds information even when it is not supplied with power.

Now, processing performed by the information processing apparatus 102 when the information processing apparatus 102 and the charging server are disconnected from each other will be explained.

First, the acquisition unit 32 acquires statistical information from the IP core 21. The storage unit 33 stores the statistical information acquired by the acquisition unit 32 in the non-volatile memory 3. The storage unit 33 holds the statistical information stored in the non-volatile memory 3 for a certain period of time.

The generation unit 35 generates a hash value using a hash function from the statistical information stored in the non-volatile memory 3 when the user updates the license of the IP core 21. The encryption/decryption unit 37 encrypts only the hash value generated by the generation unit 35 using the private key A. The storage unit 33 stores the statistical information and the encrypted hash value in the memory 2.

The statistical information confirmation unit 11 confirms authenticity of the statistical information stored in the storage unit 33 on the OS. The user manually outputs the statistical information and the hash value from the statistical information output unit 12. The user transmits, to the charging server, the statistical information and the hash value that have been output in an environment that can be connected to the charging server. The vendor decrypts the hash value using the public key A that has been distributed in advance in the charging server and confirms authenticity of the statistical information. The vendor stores the statistical information whose authenticity has been confirmed in a database of the charging server.

The user obtains license information from the charging server in an environment that can be connected to the charging server. The user is able to update the license by manually installing the obtained license information in the information processing apparatus 102.

In order to ensure authenticity of the license information generated by the charging server, the generation unit 35 generates a hash value using a hash function from the obtained license information. The encryption/decryption unit 37 encrypts only the hash value using the public key A.

The user installs the license information and the encrypted hash value from the license information input unit 13. The encryption/decryption unit 37 decrypts the hash value input from the license information input unit 13 using the private key A. The license information confirmation unit 31 confirms authenticity of the license information. The backup unit 36 stores the installed license information in the non-volatile memory 3. The allowance unit 34 allows the IP core 21 to operate based on the stored license information.

As described above, according to this example embodiment, even when the information processing apparatus 102 and the charging server are disconnected from each other, it is possible to prevent charging based on unauthorized information.

### <Hardware configuration example>

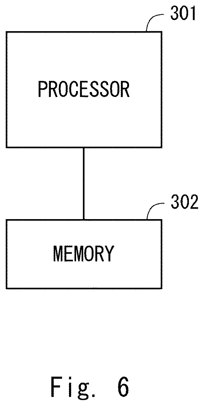

Fig. 6 is a block diagram showing a hardware configuration example for achieving information processing. This hardware configuration includes a processor 301 and a memory 302.

The processor 301 loads a computer program (information processing program) from the memory 302 and executes the loaded computer program, thereby performing processing of the OS 10 in the statistical information confirmation unit 11 according to the aforementioned example embodiments. Here, the information processing program causes a computer to execute a step of acquiring statistical information indicating the usage status of an IP core and outputting the acquired statistical information and a step of confirming authenticity of the statistical information.

The processor 301 may be, for example, a microprocessor, a Micro Processing Unit (MPU), or a Central Processing Unit (CPU). The processor 301 may include a plurality of processors.

The memory 302 is formed of a combination of a volatile memory and a non-volatile memory. The memory 302 may include a storage located apart from the processor 301. In this case, the processor 301 may access the memory 302 via an I/O interface (not shown).

In the example shown in Fig. 6, the memory 302 is used to store software modules. The processor 301 loads these software modules from the memory 302 and executes the loaded software modules, thereby being able to perform processing of the information processing system described in the aforementioned example embodiments.

Each of the processors executes one or more programs including instructions for causing a computer to execute the algorithm described using the drawings. The programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CDROM), CD-R, CD-R/W, semiconductor memories (such as mask ROM, Programmable ROM (PROM), Erasable PROM (EPROM), flash ROM, Random Access Memory (RAM), etc.). Further, the program(s) may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

Note that the present invention is not limited to the aforementioned example embodiments and may be changed as appropriate without departing from the spirit of the present invention.

For example, while the explanation has been given using the configuration in which one IP core 21 is connected to one acceptance/rejection unit 30 in the aforementioned examples, this is merely an example. A plurality of IP cores 21 may be connected to one acceptance/rejection unit 30. It may be possible to identify license information of each of a plurality of IP cores 21 and to switch between valid and invalid of the license from the charging server 40 in real time for each of the IP cores 21.

The whole or part of the example embodiments disclosed above can be described as, but not limited to, the following supplementary notes.

### (Supplementary Note 1)

A charging information processing apparatus comprising:
an IP core configured to store statistical information for charging;
an acceptance/rejection unit configured to control acceptance and rejection of an operation of the IP core based on license information of the IP core, the acceptance/rejection unit acquiring the statistical information from the IP core and outputting statistical information to be transmitted to a charging server; and
a statistical information confirmation unit configured to confirm authenticity of the statistical information output from the acceptance/rejection unit by comparing the statistical information stored in the IP core with the statistical information output from the acceptance/rejection unit.

### (Supplementary Note 2)

The charging information processing apparatus according to Supplementary Note 1, wherein it is determined that the statistical information output from the acceptance/rejection unit is authentic when the difference between the statistical information stored in the IP core and the statistical information output from the acceptance/rejection unit is within a predetermined threshold range, and it is determined that the statistical information output from the acceptance/rejection unit is not authentic when the difference is outside the threshold range.

### (Supplementary Note 3)

The charging information processing apparatus according to Supplementary Note 1 or 2, wherein
the acceptance/rejection unit generates a hash value based on the output statistical information and encrypts the hash value, and
the statistical information confirmation unit confirms authenticity of the statistical information output from the acceptance/rejection unit based on the length of data of the encrypted hash value.

### (Supplementary Note 4)

The charging information processing apparatus according to Supplementary Note 3, wherein the statistical information confirmation unit determines that the statistical information output from the acceptance/rejection unit is authentic when the length of data of the encrypted hash value is shorter than a predetermined length, and determines that the statistical information output from the acceptance/rejection unit is not authentic when the length of data is longer than the predetermined length.

### (Supplementary Note 5)

The charging information processing apparatus according to any one of Supplementary Notes 1 to 4, further comprising a transmission unit configured to transmit the statistical information output from the acceptance/rejection unit to the charging server when it has been confirmed that the statistical information output from the acceptance/rejection unit is authentic.

### (Supplementary Note 6)

The charging information processing apparatus according to Supplementary Note 3 or 4, further comprising a transmission unit configured to transmit the statistical information output from the acceptance/rejection unit and the encrypted hash value to the charging server when it has been confirmed that the statistical information output from the acceptance/rejection unit is authentic.

### (Supplementary Note 7)

The charging information processing apparatus according to any one of Supplementary Notes 1 to 6, further comprising an output unit configured to output the statistical information output from the acceptance/rejection unit to an external storage device when it has been confirmed that the statistical information output from the acceptance/rejection unit is authentic.

### (Supplementary Note 8)

The charging information processing apparatus according to any one of Supplementary Notes 1 to 7, wherein
the statistical information includes at least one of:
the operating time of the IP core;
the communication traffic of the IP core;
the load factor of the IP core;
the power consumption of the IP core; and
the temperature of the IP core.

### (Supplementary Note 9)

A charging information processing system comprising:
the charging information processing apparatus according to any one of Supplementary Notes 1 to 8; and
a charging server capable of communicating with the charging information processing apparatus and that charges a user who uses the IP core based on the statistical information received from the charging information processing apparatus.

### (Supplementary Note 10)

The charging information processing system according to Supplementary Note 9, wherein
the charging server further comprises a generation unit configured to generate license information indicating whether or not to allow the user to use the IP core, and
the acceptance/rejection unit operates or stops the IP core based on the license information.

### (Supplementary Note 11)

A charging information processing method comprising:
acquiring statistical information for charging from an IP core that stores the statistical information;
acquiring statistical information to be transmitted to a charging server from an acceptance/rejection unit configured to control acceptance and rejection of an operation of the IP core based on license information of the IP core; and
confirming authenticity of the statistical information acquired from the acceptance/rejection unit by comparing the statistical information acquired from the IP core with the statistical information acquired from the acceptance/rejection unit.

### (Supplementary Note 12)

A charging information processing program causing a computer to execute the processing of:
acquiring statistical information for charging from an IP core that stores the statistical information;
acquiring statistical information to be transmitted to a charging server from an acceptance/rejection unit configured to control acceptance and rejection of an operation of the IP core based on license information of the IP core; and
confirming authenticity of the statistical information acquired from the acceptance/rejection unit by comparing the statistical information acquired from the IP core with the statistical information acquired from the acceptance/rejection unit.

While the present disclosure has been described above with reference to the example embodiments, the present disclosure is not limited to the aforementioned example embodiments. Various changes that may be understood by one skilled in the art may be made to the configurations and the details of the present disclosure within the scope of the present disclosure.

This application is based upon and claims the benefit of priority from Japanese Patent Application No. 2020-049419, filed on March 19, 2020, the disclosure of which is incorporated herein in its entirety by reference.

### Reference Signs List

- 1: Hardware
- 2: Memory
- 3: Non-volatile Memory
- 10: OS
- 11, 41: Statistical Information Confirmation Unit
- 12: Statistical Information Output Unit
- 13: License Information Input Unit
- 35, 45: Generation Unit
- 16, 43: Transmission Unit
- 17, 37, 47: Encryption/decryption Unit
- 20: IP Core Module
- 21: IP Core
- 30, 48: Acceptance/rejection Unit
- 31: License Information Confirmation Unit
- 32: Acquisition Unit
- 33, 46: Storage Unit
- 34: Allowance Unit
- 36: Backup Unit
- 40: Charging Server
- 42: Database
- 100, 101, 102: Information Processing Apparatus
- 200: Information Processing System

## Claims

1. A charging information processing apparatus comprising:
an IP core configured to store statistical information for charging;
acceptance/rejection means for controlling acceptance and rejection of an operation of the IP core based on license information of the IP core, the acceptance/rejection means acquiring the statistical information from the IP core and outputting the statistical information to be transmitted to a charging server; and
statistical information confirmation means for confirming authenticity of the statistical information output from the acceptance/rejection means by comparing the statistical information stored in the IP core with the statistical information output from the acceptance/rejection means.

2. The charging information processing apparatus according to Claim 1, wherein the statistical information confirmation means determines that the statistical information output from the acceptance/rejection means is authentic when the difference between the statistical information stored in the IP core and the statistical information output from the acceptance/rejection means is within a predetermined threshold range and determines that the statistical information output from the acceptance/rejection means is not authentic when the difference is outside the threshold range.

3. The charging information processing apparatus according to Claim 1 or 2, wherein
the acceptance/rejection means generates a hash value based on the output statistical information and encrypts the hash value, and
the statistical information confirmation means confirms authenticity of the statistical information output from the acceptance/rejection means based on the length of data of the encrypted hash value.

4. The charging information processing apparatus according to Claim 3, wherein the statistical information confirmation means determines that the statistical information output from the acceptance/rejection means is authentic when the length of data of the encrypted hash value is shorter than a predetermined length and determines that the statistical information output from the acceptance/rej ection means is not authentic when the length of data of the encrypted hash value is longer than the predetermined length.

5. The charging information processing apparatus according to any one of Claims 1 to 4, further comprising transmission means for transmitting the statistical information output from the acceptance/rejection means to the charging server when it has been confirmed that the statistical information output from the acceptance/rejection means is authentic.

6. The charging information processing apparatus according to Claim 3 or 4, further comprising transmission means for transmitting the statistical information output from the acceptance/rej ection means and the encrypted hash value to the charging server when it has been confirmed that the statistical information output from the acceptance/rejection means is authentic.

7. The charging information processing apparatus according to any one of Claims 1 to 6, further comprising output means for outputting the statistical information output from the acceptance/rej ection means to an external storage device when it has been confirmed that the statistical information output from the acceptance/rejection means is authentic.

8. The charging information processing apparatus according to any one of Claims 1 to 7, wherein
the statistical information includes at least one of:
the operating time of the IP core;
the communication traffic of the IP core;
the load factor of the IP core;
the power consumption of the IP core; and
the temperature of the IP core.

9. A charging information processing system comprising:
the charging information processing apparatus according to any one of Claims 1 to 8; and
a charging server capable of communicating with the charging information processing apparatus and that charges a user who uses the IP core based on the statistical information received from the charging information processing apparatus.

10. The charging information processing system according to Claim 9, wherein
the charging server further comprises generation means for generating license information indicating whether or not to allow the user to use the IP core, and
the acceptance/rejection means operates or stops the IP core based on the license information.

11. A charging information processing method comprising:
acquiring statistical information for charging from an IP core that stores the statistical information;
acquiring statistical information to be transmitted to a charging server from acceptance/rejection means for controlling acceptance and rejection of an operation of the IP core based on license information of the IP core; and
confirming authenticity of the statistical information acquired from the acceptance/rejection means by comparing the statistical information acquired from the IP core with the statistical information acquired from the acceptance/rejection means.

12. A non-transitory computer readable medium storing a charging information processing program for causing a computer to execute the processing of:
acquiring statistical information for charging from an IP core that stores the statistical information;
acquiring statistical information to be transmitted to a charging server from acceptance/rejection means for controlling acceptance and rejection of an operation of the IP core based on license information of the IP core; and
confirming authenticity of the statistical information acquired from the acceptance/rejection means by comparing the statistical information acquired from the IP core with the statistical information acquired from the acceptance/rejection means.
